# EUROPEAN PATENT APPLICATION

(11) **EP 1 377 034 A1**
(43) Date of publication of application: **02.01.2004**
(21) Application number: 02014326.9
(22) Date of filing: 27.06.2002
(51) Int. Cl.: H04N 5/00, H04N 7/24, G06F 9/455, G06F 9/45

(54) **Data processing device and method for interactive television**

(71) Applicant: Thomson Licensing S.A., 92100 Boulogne Billancourt (FR)
(72) Inventor: Champel, Mary-Luc, 35220 MARPIRE (FR); Cogne, Laurent, 35320 La Couyere (FR); Lubbers, Willem, 35000 Rennes (FR)
(74) Representative: Kohrs, Martin

(57) **Abstract**

A programmable data processing device for a digital TV set-top box comprises:
- a loading engine (LE) for receiving portions of code of a first type and/or data from a DSM-CC carousel(DC),
- a storage means (C) for storing the portions received by the loading engine,
- an execution engine (EE) for executing an application embodied by the received portions; and
- a translating engine (TE) for translating the first type code into a native code of the execution engine (EE).

The translating engine (TE) is adapted to compile at least a certain one of said received portions into native code and to store the thus compiled portion in the storage means (C), and to interpret other portions of code, and the execution engine (EE) is adapted to process compiled code and interpreted code within a same application.

## Description

The present invention relates to a data processing device and method which are specifically adapted for transmitting applications from a central station of a network to a plurality of terminal stations and carrying out the applications at the terminal stations, in which network data rates for downlink transmission (central to terminal stations) are far higher than for uplink transmission (terminal stations to central station).

A typical network of this type is an interactive TV network. In such a network, the terminal stations are formed of TV sets equipped with a so-called set-top-box, and the central station is a broadcasting station. In downlink, Audio/Video data (AV data) and application data are transmitted at a high rate to the individual TV sets; uplink data rates are far lower and may be zero for applications not requiring feedback to the broadcasting station.

Although the topology of such a network is similar to a common computer network with a plurality of work-stations connected to a common server, the nature of these networks poses a number of new problems. One is that in an interactive TV network, the number of terminal stations is extremely large, it may be a million terminals or more. Whereas in a local computer network, each terminal may be free to request a particular application to be downloaded to it at any given time, allowing the same in an interactive TV network would require prohibitively high data transmission capacities. In the art of interactive television this problem is solved using the so-called DSM-CC (Digital Storage Media Command and Control) carousel. The DSM-CC carousel is a data stream transmitted by the broadcasting station along with the AV data in which a sequence of modules is transmitted, each of the modules comprising code and/or data of one or more applications that can be carried out by the terminal stations. The transmission of this sequence of modules is repeated endlessly. Since the number of applications is limited, transmission of every module is repeated after a certain time interval. In order to be able to carry out an application, a terminal station has to collect all modules belonging to this application.

If a terminal station starts to collect modules of a given application only after having received an instruction from the user to launch this application, a noticeable delay between the instruction and the launching may result which is annoying for the user.

In order to relieve the this problem, according to the MHP (Multimedia Home Platform) standard of the DVB (Digital Video Broadcast Forum, www.dvb.org), the broadcasting station may transmit so-called pre-fetch signalization which indicates, for each module transmitted on the carousel, whether it might be worth while to store this module at the terminal station because there is a probability that this module may have to be executed in the near future. Correspondingly, the terminal stations may have a storage means for storing therein the modules specified by the pre-fetch signalization, so that in case that such a module has to be executed, execution can begin straight away, without having to wait for retransmission of the module.

This might be a satisfying solution if the code broadcast on the DSM-CC carousel were a native code that could be executed by the terminal stations without need for further preliminary processing. But since the use of native code would have the drawback of requiring an extremely high degree of standardization of the terminal stations and since there are many different manufacturers of such terminal stations, for which such a standardization is difficult to impose the industry seeked to provide the terminal stations with a Java virtual machine and transmit the applications from the broadcasting station to the terminal stations as Java intermediate code. This solution has indeed the advantage to have DVB-MHP applications running on any DVB-MHP platform whatever the specific underlying hardware.

However, the price of this solution is the need for a powerful Java virtual machine, implying significant processor speed and an important amount of memory. On the market, this need for a relatively expensive hardware platform is commonly seen as an important drawback of the DVB-MHP solution to interactive digital television and can be considered as a serious limit to the quick expansion of the DVB-MHP solution.

In classical Java execution environments, application processing speed is often gained by reducing execution time. This is done by means of compilation of Java classes to native code that can be directly carried by a processor of the Java virtual machine and not to intermediate code that must first be interpreted by the machine before it can be executed.

In a digital TV network of the type described above, it is obvious that such a compilation can only be done at the terminal stations. If the broadcasting station already transmitted a ready-compiled application, interoperability would be lost. If compilation is done at the terminal station, execution speed can be improved, but load latency will increase, because when the user has given an instruction to launch a given application, he not only has to wait until all modules of this application have been received from the carousel, but, additionally, the time required for their compilation.

The object of the present invention is, therefore, to provide a programmable data processing device and a data processing method for use in a network in which applications are transmitted by portions in a common stream, in which a small delay between inputting a decision to launch an application and the actual start of the application can be achieved without requiring high processing power.

This object is achieved by a programmable data processing device comprising:
- a loading engine for receiving portions of code of a first type and/or data from a stream in which said portions are repeatedly transmitted,
- a storage means for storing the portions received by the loading engine,
- an execution engine for executing an application embodied by the reeived portions,
- a translating engine for translating the first type code into a native code of the execution engine,
- characterised in that the translating engine is adapted to compile at least a certain one of said received portions into native code and to store the thus compiled portion in the storage means, and to interpret other portions of code, and that the execution engine is adapted to process compiled code and interpreted code within a same application.

This object is also achieved by a data processing method, comprising the steps of:
- a) receiving portions of code of a first type and/ or data from a stream in which said portions are repeatedly transmitted, wherein the set of portions transmitted in said stream embodies one or more data processing applications
- b) storing predetermined ones of said portions in a storage means,
- c) in a translation engine, compiling at least one of said portions comprising first type code into native code of an execution engine,
- d) in the execution engine, carrying out one of said data processing applications by executing the compiled native code of the selected portions belonging to said one application and by interpreting non-selected portions of this application.

In this device and method, a delay in transmitting parts of the code of a given application to the data processing device can be made use of by having the translating engine compile portions of code that have already been received at the data processing device. As soon as the complete code of an application has been received, execution of the application can be started; code portions that have not yet been compiled at that time can be carried out by interpretation.

Preferably, execution of an application will begin only when an instruction to this effect has been input by a user. Before this happens, the device should best have collected and compiled code portions of this application already.

Already, the fact that, when execution is started, parts of the code are compiled increases execution speed over that of a conventional device in which all code is interpreted. In data processing devices in which execution engine and translating engine share processing power, the main reason for this speed increase is that when interpreting, processing power is spent on translating a portion of intermediate code into native code of the execution engine each time this portion is executed, whereas, when compiling, the code is translated once and for all, so that interpretation always absorbs processing power that might better be used for execution of the application. But even in systems where execution engine and translating engine do not compete for processing power, a speed increase is possible because compiled code can be made more efficient than interpreted code.

If the execution engine and the translating engine of the device are physically separate units, a further improvement can be achieved by having the translating unit compile further portions of the code at execution time of the application. This is possible without having to provide a particularly powerful translation engine because when the execution engine carries out compiled code, the translation engine has spare time that is available for compiling. In this way, the ratio of compiled to interpreted codes will continue to increase during execution until, finally, all code of the application is compiled.

If the translating engine and the execution engine are virtual devices implemented in a time sharing fashion in a common processor, compilation can also continue at execution time as described above, or, alternatively, when compiled code is being executed, all processing power of the common processor can be assigned to the execution engine.

Most advantageously, the translating engine is adapted to select the code portions it compiles according to signalling information it receives.

One source of said signalling information may be the stream in which the portions of code are transmitted. If the stream is a DSM-CC carousel, the pre-fetch signalling conventionally transmitted in such a carousel may be used as said signalling information. That is, whereas conventionally, a DVB-MHP platform will only store a DSM-CC module specified by pre-fetch signalling in the form in which it was transmitted and will eventually later interpret it, the data processing device of the present invention may additionally compile such a module.

Of course, the portions to be compiled might also be fractions of a DSM-CC module. In that case, in order to specify the fractions to be compiled, another type of signalling information besides the DSM-CC pre-fetch signalling would have to be transmitted on the carousel. Such signalling information might be defined by a person who develops the application based e.g. on the relative frequency with which one or another portion of code are executed or the expected increase in efficiency of compiled code over interpreted code, which may be different for various portions of code.

As an alternative or additionally, the translating engine may receive signalling information indicating portions of code to be compiled from the execution engine. This is particularly useful at run time of an application. Such an application may be composed of a plurality of modules or portions, some of which may be executed hundreds of times and others not at all. Usually, when an application is developed, it is possible to estimate which portions of the code are executed frequently and which are not. Compiling instructions for frequently executed portions of code may be comprised in other portions of the code of an application, e.g. in an initializing portion, so that when the initializing portion is carried out, signalling information according to these compiling instructions may be sent from the execution engine to the translating engine.

The translating engine should further be adapted to decide whether to compile or to interpret a given portion of first type code depending on signalling information it receives from the execution engine. Namely, the translating engine will also have to receive signalling information specifying a certain address in the code when the execution engine has to carry out a jump or branch instruction to that address. If the corresponding code portion is not yet compiled at the time the instruction has to be carried out, the translating engine will have to interpret the code designated in the jump or branch instruction in order to avoid a processing delay.

If a code portion comprising the target address of the jump or branch instruction is under compilation at the time the instruction is carried out, one possibility of proceeding is that the translating engine ignores the signalling information from the execution engine requiring interpretation and that it finishes compiling the code portion. In that case the execution engine may have to wait for some time before it can carry out the jump or branch instructions, but this delay may be compensated by increased processing speed afterwards.

An alternative possibility is that in such a case the translating engine abandons compilation of this code portion and starts interpreting it, in order to keep the execution engine from waiting. It can also be provided that the translating engine chooses between these two alternatives based on an estimate of the processing time required for finishing compilation of the portion.

Further features and advantages of the present invention become apparent from the subsequent description of preferred embodiments given in connection with the appended drawings.
- Fig. 1: is a schematic block diagram of a programmable data processing device according to the present invention;
- Fig. 2: is a first flow chart of processes carried out by the device of Fig. 1;
- Fig. 3: is a second flow chart of alternative processes carried out by the device of Fig. 1;
- Figs. 4A,: 4B show two possible embodiments of a detail of Fig. 3; and
- Fig. 5: is a block diagram of a second embodiment of the device of the invention.

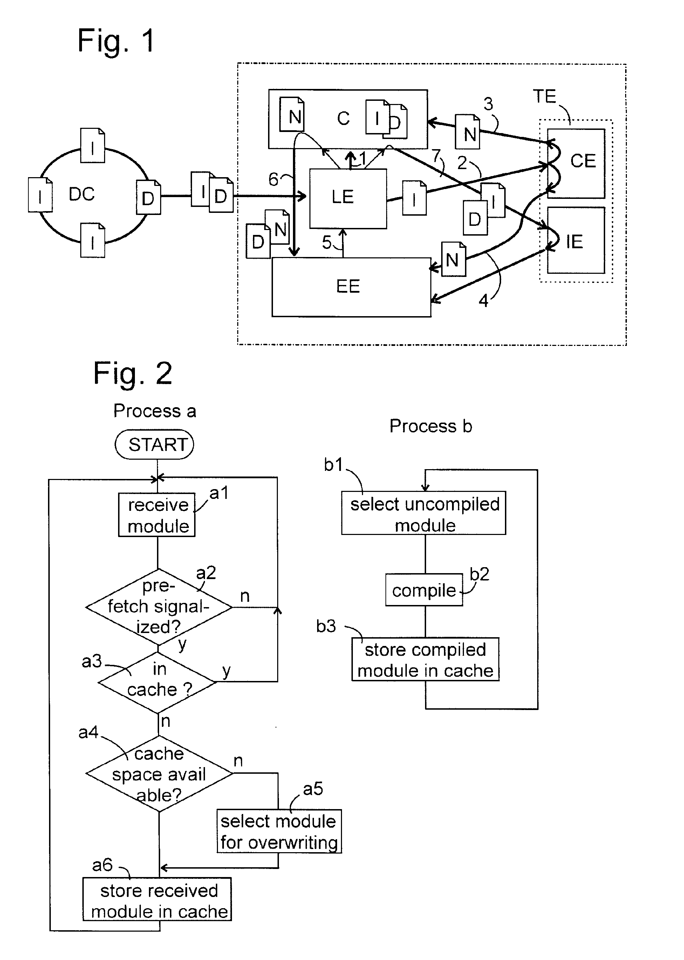

The data processing device, delimited by a dashed frame in Fig. 1, comprises a loading engine LE, a translating engine TE made up of a compiling engine CE and an interpreting engine IE, a cache C and an execution engine EE. The device is part of a set-top-box for digital television.

The loading engine LE is adapted to receive modules of code and data from a DSM-CC carousel DC. In this carousel, a set of payload modules is cyclically transmitted. There are two types of payload modules, data modules represented as sheets of paper bearing a letter D and code modules represented as sheets with a letter I. Code and data modules will accordingly also be referred to as I and D modules, respectively. Code in the code modules I may belong one or more applications that can be executed by the execution engine EE. The code contained in the code modules I is an intermediate code, i.e. a code which may be more compact than code in a high level language in which the application was originally written, but which is not executable by the execution engine without prior translation. Preferably, the high level language from which the intermediate code is derived is the Java programming language. The use of the intermediate code is necessary in order to ensure operability of the code in a wide variety of set-top-boxes made by different manufacturers.

There is a connection 1 between the loading engine LE and the cache C by which the loading engine LE may store I and D modules received from the carousel DC in cache C. There is another connection 2 between the loading engine LE and the compiling engine CE by which the loading engine LE may forward I modules to the compiling engine CE for compilation. The compiling engine CE compiles these into modules of native code represented as sheets of paper bearing the letter N, which, as shown in the Fig., can be forwarded to cache C via a connection 3 or which may also be directly forwarded to the execution engine EE for immediate execution via connection 4. The cache may thus contain three types of modules, namely I, D and N modules.

When the execution unit EE carries out an application, it informs the loading engine LE of a required code module via connection 5. The loading engine LE will then fetch the corresponding module from the cache C and forward it to the execution engine EE via connection 6, if the module is compiled, or via connection 7 to the interpreting engine IE, if the module is in intermediate code.

Obviously, each of the various engines of the device may be a circuit distinct from the others, or one or more of these engines may be embodied by a microprocessor which, at different times, carries out the different tasks of the various engines as described above.

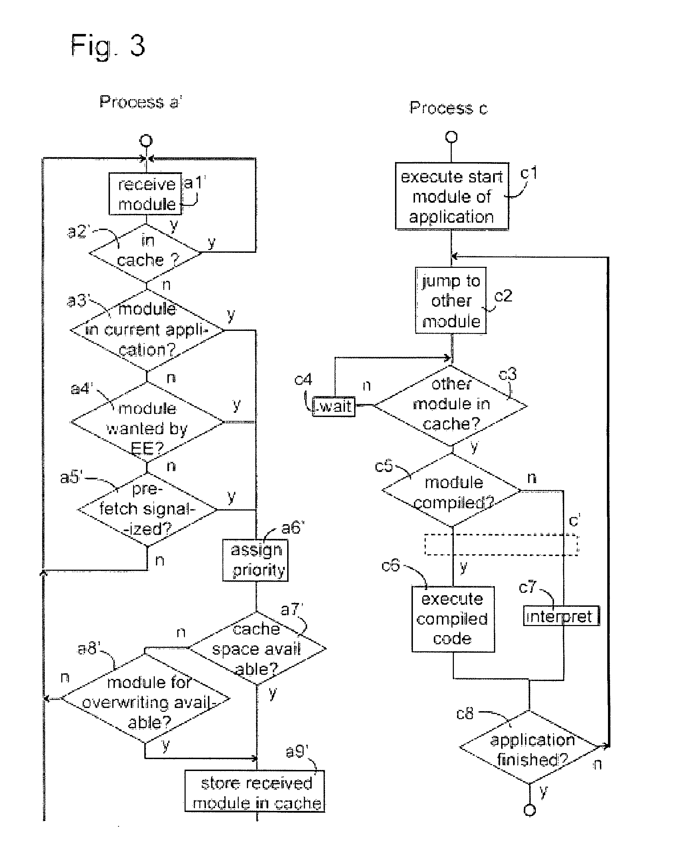

The processes executed by the various engines of the device will now be described in detail referring to Figs. 2 and 3.

In this description, it is assumed that the device of the invention is a set-top-box for digital television that can execute various applications continuously transmitted by the DSM-CC carousel according to the choice of an operator.

Fig. 2 shows two processes preferred to as process a and process b executed by the loading engine LE and the compiling engine CE in a set-top-box immediately after switching on, before an operator has chosen an application to be executed. Processes a and b are executed concurrently. In step a1 of process a, the loading engine LE receives a module from the DSM-CC carousel DC. The module can be an I module or a D module. In step a2, the loading engine LE judges whether the module is accompanied by pre-fetch signalization. In principle, the question of whether a module is signalized to be pre-fetched is at the discretion of the operator of the carousel DC. In general, a module will at least be signalized to be pre-fetched if it contains code or data that are necessary to begin execution of any of the applications transmitted on carousel DC, for this will allow the set-top-box to begin execution without delay, as soon as the operator has chosen an application.

If the module is not signalized to be pre-fetched, the loading engine will ignore it and will wait for the next module to arrive.

If the module is signalized to be pre-fetched, the loading engine LE will check in step a3 whether it is present in the cache C already. If yes, the process may return to step a1 to wait for the next module. Alternatively, if there is a possibility of modules being updated between subsequent transmissions on the carousel DC, it may be provided that the earlier version of the module present in cache C is overwritten by the new one.

If the module is not present in the cache C, the loading engine LE checks in step a4 whether there is space available in cache C for storing it. If there is no space available, the loading engine LE selects a module stored in the cache which may be overwritten in step a5. Selection criteria might be how long a module has been stored in the cache C without being used. Alternatively, the pre-fetch signalization might specify various priority levels, and the module selected for overwritting might have a lower pre-fetch priority level than the module currently received. If there is no module having a lower pre-fetch priority level than the presently received one, the latter one would have to be discarded. If there is space available in the cache or if it has been made available by selecting a module for overwriting, the presently received module is stored in the cache in step a5, and the loading engine LE is ready to receive another module from the carousel DC.

Concurrently, the compiling engine CE cyclically repeats the steps b1 of selecting an uncompiled module, b2 of compiling it and b3 of storing the compiled module in the cache C. As soon as the module is compiled, the storage space in cache C containing the original intermediate code module is released, so that any newly received module may be stored therein.

Processes a and b may be completely unsynchronized; i.e. whenever the compiling engine CE has finished step b3 for one module, it immediately returns to step b1 and searches the cache C for another module to be compiled. When there is more than one uncompiled module in the cache and there are pre-fetch priority levels defined for these, the compiling engine CE will always select the module having the highest priority.

When the loading engine LE and the compiling engine CE are embodied in a single microprocessor or other appropriate electronic circuit and share its processing power, neither of processes a and b must keep the microprocessor completely occupied. In this case, it is preferable to have the microprocessor act as the loading engine LE, e.g., triggered by an interrupt, whenever a module is received and it has to be decided whether to store the module or not, and to have it act as the compiling engine CE whenever the loading engine would be idle. I.e. process a is executed as a foreground or high priority task, and process b is executed as a low priority or background task which may be interrupted in favor of process a whenever necessary.

In an alternative embodiment, the processes a and b may also be synchronized, namely in that process b is triggered when step a6 has been carried out, and selects the module stored in step a6

If the processes a, b are synchronized, according to a further alternative, step a6 may be dispensed with, and instead of storing the received module in the cache C, it is supplied directly from the loading engine LE to the compiling engine CE and is written to the cache C after compilation only.

Not synchronizing processes a and b may be preferable if loading engine LE and compiling engine CE share the processing power of a common processing circuit and there is a risk that compilation of a module may not be finished when a further module is received accompanied by pre-fetch signalization. However, this risk may be decreased by selecting the sequence in which modules are transmitted on the carousel DC such that modules to be pre-fetched are regularly interspersed between modules without pre-fetch signalization.

In general, the modules in the DSM-CC carousel DC that are signalized to be pre-fetched will be the modules comprising code and data necessary for starting any of the various applications. Accordingly, if the capacity of the cache is large enough, starting code portions for all applications transmitted on the carousel DC will be present in the cache in compiled form, so that when an operator selects a particular application at the set-top-box, execution of this application can commence without delay. If the storage capacity of the cache is large enough, other important modules of the various applications may also be stored therein and, eventually, be compiled. A code section is said to be important in this context if it has a high probability of being executed frequently and/or subsequently to the starting portion of the application.

Since the DSM-CC carousel of a broadcasting station may serve various set-top-boxes having different cache storage capacities, the pre-fetch signalization should preferably comprise a priority level indicating enabling the loading engine LE to select only the most important code portions for storing them in the cache.

When the operator chooses an application to be executed on the set-top-box and inputs this choice, there is a possibility that all code required for the application is present in the cache already, be it in compiled or uncompiled form. If so, process a can be stopped and the execution engine EE will begin to run process c of Fig. 3.

In most cases, however, not all code of the application will be present in the cache, so that process a replaced by a modified process a' of Fig. 3, the object of which is to gather the missing code portions from the carousel DC.

In process a', the loading engine LE receives a module from the carousel DC in step a1'. If it is found in step a2' that the same module is present in the cache already, be it in compiled or uncompiled form, the process returns to step a1' to wait for the next module. If the module is not in the cache, step a3' checks whether the received module is part of the application selected to be executed. If it is, the process branches to step a6', described later. If the answer is no, the loading engine LE checks in step a4' whether it has received any control information from the executing engine EE indicating that this module might be wanted by the execution engine. The execution engine might send such control information concerning a specific module of a second application not currently executed based on an instruction to do so in the presently executed application, if there is a possibility of the present application invoking said second application.

If the answer in step a4' is yes, the process branches to step a6', if not, step a5' checks whether the module is signalized to be pre-fetched. If it is, the process also switches to a6', if not, it returns to a1' to wait for another module.

In step a6', the module is assigned a priority level. If it is a pre-fetch signalized module and the pre-fetch signalling specifies a priority level, this level may be assigned. If the module belongs to the current application or if it is wanted by the execution engine EE, it is assigned a priority level higher than any pre-fetch signalling priority level.

Step a7' then checks whether there is cache space available. If not, a module in cache C must be selected for overwriting in step a8'. This selection takes account of the priority level assigned to the present module in step a6' and of the priority levels of modules already in the cache C. Since a module belonging to the present application or wanted by the execution engine always has a higher priority level then a pre-fetch signalized module that may belong to any other application, these latter modules may always be overwritten in order to be able to store a module of the current application or a wanted module. If the priority of the present module is so low, that there is no other module in the cache that may be overwritten, the module will be discarded. If there is free space available in the cache C, or if there is a module in the cache C that may be overwritten, the present module will be stored in the cache C in step a9'.

If the cache capacity is sufficient, all modules of an application will be in cache C after one cycle of the carousel DC.

While the loading engine LE is carrying out process a', the compiling engine CE may continue process b of Fig. 2, so that after a certain time, the complete code of the selected application will be available in compiled form.

In an embodiment where the compiling engine CE and execution engine EE share the processing power of common processing circuit, and processing power is short, process b may also be stopped when execution of the application begins.

Process c of Fig. 3 relates to the execution of the selected application by execution unit EE.

In a first step c1, the execution unit EE will execute the start module of the application. The start module is assumed to be present in cache C in compiled form. Eventually, it may become necessary for the execution unit EE to jump to another module of the code of the application in step c2. To this end, the execution unit EE sends control information to the loading engine LE identifying the required module.

In step c3, the loading engine LE determines whether this required module is present in cache C. If it is not, it is necessary to wait until the module is received from the carousel DC (step c4). If the module is present in the cache, the loading engine LE further determines whether the module is compiled or not (step c5). If the module is compiled, the compiled code is forwarded directly from cache C to execution unit EE in step c6; otherwise, it is forwarded to interpreting engine IE for interpretation, and the interpreting engine feeds interpreted instructions to execution engine EE in step c7. Execution of the compiled code or interpretation continues until either the process reverts to step c2 in order to jump to another module or the application is finished.

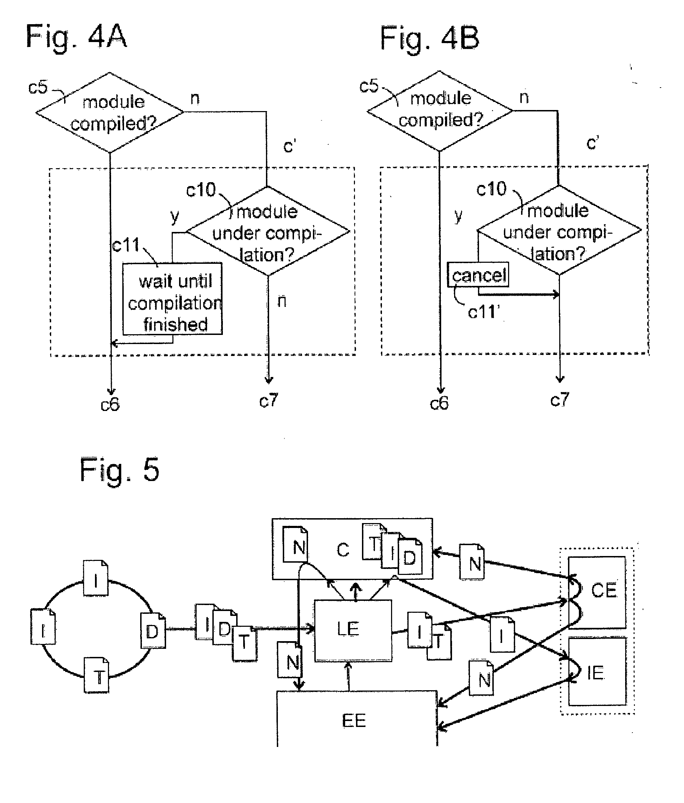

According to advanced embodiments of process c, the dashed frame c' shown in the flow chart of process c may comprise additional method steps shown in Fig. 4A or 4B. Namely, if process b is continued concurrently with process c, a situation may arise in which the module to which the execution engine EE attempts to jump in step c2 is being compiled by compilation engine CE (step c10). In such a situation, there are two possibilities of avoiding a conflict. As shown in Fig. 4A, the execution engine EE may be obliged to wait until the compilation engine CE has finished compiling the code (step c11) and then branches to step c6 described above. Alternatively, as shown in Fig. 4B, if a conflict is recognized in step c10, compilation may be aborted in step c11', and the module is interpreted in step c7.

In the embodiments described up to now, it has been assumed that when the loading engine LE receives a module from the DSM-CC carousel DC, it will use signalling information of the carousel such as the pre-fetch signalling for deciding whether it is appropriate to compile the received code module or not. Of course, this is a simple and convenient way of carrying out the present invention which has the advantage that it can be employed with a conventional DSM-CC carousel without requiring any modification in the signalling and payload transferred by it.

In an advanced embodiment of the present invention, payload modules are used as control information that enables the device of the invention to decide whether a received code module should be compiled or not. To this end, a third type of payload module for the DSM-CC carousel is provided. This module is referred to as code analysis table in the following, and is represented by a sheet of paper bearing the letter T in Fig. 5.

A code analysis table T may contain
a) control information identifying intermediate code modules I of the carousel or portions of such modules which should be pre-compiled. Compilation of portions of a module may be advantageous because one I module of the carousel may comprise code belonging to various applications, not all of which it may be useful to pre-compile. Further, among the code relating to a single application, there may be portions that are likely to be executed much more frequently than others. Accordingly, in order to achieve optimum execution speed of an application from the beginning, it may be wise to pre-compile only the important portions of an I module, leaving the less important ones for interpretation, so that the processing time of the compilation engine CE thus saved can be used for compiling important portions of another I module. These portions may for example be single functions or methods of the intermediate code.
   This control information may also indicate priority levels for the compilation of the individual portions. This enables the compiling engine first to compile portions of an I module having maximum priority level, then to compile portions having the same priority level of other modules, and, as soon as compilation time can be spared, to begin compiling portions of the modules having a lower priority level.
b) compiling optimization information. This information may give hints to the compilation engine CE on how to compile a given portion of code in order to achieve optimum system performance. Optimization specified in this information may involve e.g. function inlining, loop unrolling, register usage, pipelining, switch rewriting, etc. This information may be prepared by the developer of a given application. It is not necessary that a set-top-box heeds the compilation hints given in the T modules; if it does not, it will also be able to compile correctly, but if it does, it will be able to generate highly efficient native code although the algorithm of the compiling engine may be quite simple. According to its level of sophistication, a set-top-box may therefore be able to heed none, part or all of these hints.

By the present invention, the following main advantages are achieved. First of all, due to the compilation of at least part of the code of an application, the execution speed of the application is strongly increased. Interpretation of code is clearly slower than execution of compiled code, and this is mainly due to the fact, that when interpreting, processing power is spent on translating a portion of intermediate code into native code of the execution engine EE each time this portion is executed, whereas, when compiling, the code is translated once and for all.

The invention is extremely efficient when bottleneck parts of the application get compiled. In fact, it may not be necessary to compile all parts of an application when only some parts of it are causing a heavy load on the execution engine. Obviously, when there are portions of code repeated many times over, the increase in efficiency achieved by compiling these may be considerable. On the other hand, there may be portions of code that are executed only once or have a low probability of being executed. For these, compilation will not lead to an increase in efficiency, so that it may not be worth while to compile them. A second advantage is that in general, compilation makes a code more compact. Accordingly, if code is compiled, it will be possible to store more modules in a given cache size than without compilation.

Thanks to the more efficient use of memory, it becomes possible for a given MHP to host much more applications simultaneously. From a user's point of view, this makes the box appear more powerful.

Last but not least, by judiciously preparing the code analysis table, the developer of an application has increased control on how the code he writes is translated into native instructions of the execution engine. In this way, highly efficient native code can be generated using a rather simple compilation and/or interpreting engine.

## Claims

1. A programmable data processing device comprising :
- a loading engine (LE) for receiving portions of code of a first type and/or data from a stream (DC) in which said portions are repeatedly transmitted,
- a storage means (C) for storing the portions received by the loading engine,
- an execution engine (EE) for executing an application embodied by the reeived portions,
- a translating engine (TE) for translating the first type code into a native code of the execution engine (EE)
- **characterised in that** the translating engine (TE) is adapted to compile at least a certain one of said received portions into native code and to store the thus compiled portion in the storage means (C), and to interpret other portions of code, and that the execution engine (EE) is adapted to process compiled code and interpreted code within a same application.

2. The data processing device according to claim 1, wherein the translating engine (TE) is adapted to select said certain portions according to control information received by it.

3. The data processing device according to claim 1 or 2, wherein the stream (DC) is a DSM-CC carousel.

4. The data processing device according to claim 3, wherein said portion is a DSM-CC module (I).

5. The data processing device according to claim 3, wherein said portion is a fraction of a DSM-CC module.

6. The data processing device according to one of claims 2 to 5, wherein the translating engine (TE) is adapted to receive said control information from said stream (DC).

7. The data processing device according to claims 3, 4 and 6, wherein the control information is DSM-CC pre-fetch signalling.

8. The data processing device according to claims 3 and 6 and one of claims 4 and 5, wherein the translating engine (TE) is adapted to extract the control information from a payload module (T) of the DSM-CC carousel (DC).

9. The data processing device according to claim 8, wherein the translating engine (TE) is adapted to extract compiling optimization information relating to a portion of code to be compiled from said payload module (T) and to heed the compiling optimization in the process of compiling said portion of code.

10. The data processing device according to one of claims 2 to 9, wherein the translating engine (TE) is adapted to receive control information from the execution engine (EE).

11. The data processing device according to one of claims 1 to 10, wherein the translating engine (TE) is adapted to decide whether to compile or to interpret a given portion of first type code according to control information received from the execution engine (EE).

12. The data processing device according to claim 11, wherein the translating engine (TE), during compilation of a given first type code portion, is adapted to ignore control information requiring said portion to be interpreted, and to finish compiling the portion.

13. The data processing device according to claim 11, wherein the translating engine (TE) , when receiving control information requiring a given first type code portion to be interpreted during compilation of said portion, is adapted to abandon the compilation and to start interpreting the portion.

14. A data processing method, comprising the steps of:
- a) receiving (a1, a1') portions of code (I) of a first type and/ or data (D) from a stream (DC) in which said portions (I, D) are repeatedly transmitted, wherein the set of portions transmitted in said stream (DC) embodies one or more data processing applications
- b) storing (a6, a9', b3) predetermined ones of said portions in a storage means (C),
- c) in a translation engine (TE), compiling at least one of said portions comprising first type code (I) into native code (N) of an execution engine (EE),
- d) in the execution engine (EE), carrying out one of said data processing applications by executing (c6) the compiled native code (N) of the selected portions belonging to said one application and by interpreting (c7) non-selected portions of this application.

15. The data processing method of claim 14, comprising, between steps c and d, the step of receiving an instruction from a user specifying the application to be carried out in step d.

16. The data processing method according to claim 14 or 15, wherein in step c, said at least one portion is selected (a2, a3', a4', a5') based on control information supplied to the translation engine (TE).

17. The data processing method according to one of claims 14 to 16, wherein the stream (DC) is a DSM-CC carousel.

18. The data processing method according to claim 17, wherein said portion is a DSM-CC module.

19. The data processing method according to claim 17, wherein said portion is a fraction of a DSM-CC module (I).

20. The data processing method according to one of claims 16 to 19, wherein said control information is received (a2, a5') from said stream (DC).

21. The data processing method according to claims 18 and 20, wherein the control information is DSM-CC pre-fetch information.

22. The data processing method according to one of claims 18 or 19 and claim 20, wherein the control information is a payload module (T) of the DSM-CC carousel (DC).

23. The data processing method of claim 22 wherein the control information further comprises compiling optimization information relating to a portion of code to be compiled, and the translation engine heeds the compiling optimization information when compiling said portion of code.

24. The data processing method according to one of claims 14 to 19, wherein said control information is received (a4') from said execution engine (EE).

25. The data processing method according to claim 24, wherein the translating engine (TE) decides based on said control information from the execution engine (EE) whether to compile or to interpret a given first type code portion.

26. The data processing method according to claim 25, wherein if the translation engine (TE) receives control information requiring a given portion to be interpreted during compilation of said portion, it ignores (c11) the control information and finishes compiling the portion.

27. The data processing method according to claim 25, wherein if the translation engine (TE) receives control information requiring a given portion to be interpreted during compilation of said portion, it abandons the compilation (c11') and starts interpreting the portion.

28. The data processing method according one of claims 14 to 27 in which, after step c), memory space allocated to the first type code of the compiled portion is released for overwriting.
